# EUROPÄISCHE PATENTSCHRIFT

(11) **EP 2 993 365 B1**
(45) Veröffentlichungstag und Bekanntmachung des Hinweises auf die Patenterteilung: **04.09.2019**
(21) Anmeldenummer: 15178737.1
(22) Anmeldetag: 28.07.2015
(51) Int. Cl.: F16C 17/26, F16C 17/10, F16C 17/03, F16C 23/04, B63H 23/32, B63H 5/125, F16C 43/02

(54) **PROPELLERGONDELANTRIEB MIT AXIALLAGER UND RADIALGLEITLAGER**
PROPELLER NACELLE DRIVE WITH AXIAL BEARING AND RADIAL SLIDING BEARING
ENTRAINEMENT DE PROPULSEUR OMNIDIRECTIONNEL AVEC PALIER AXIAL ET PALIER LISSE RADIAL

(30) Priorität: 08.08.2014 DE 102014011845
(43) Veröffentlichungstag der Anmeldung: 09.03.2016
(73) Patentinhaber: Renk Aktiengesellschaft, 86159 Augsburg (DE)
(72) Erfinder: Welz, Dierk, 30177 Hannover (DE); Wenzel, Uwe, 31135 Hildesheim (DE); Mischak, Rainer, 29323 Wietze (DE)
(74) Vertreter: Schlosser, Stefan

(56) Entgegenhaltungen:
- DE-A1- 2 322 972
- DE-A1-102008 037 677
- DE-U1- 9 408 824
- GB-A- 191 305 619
- US-A- 3 606 505
- US-A1- 2006 063 442

## Beschreibung

Die Erfindung betrifft einen Propellergondelantrieb.

Aus der DE 10 2008 037 677 A1 ist der grundsätzliche Aufbau eines Propellergondelantriebs bekannt. Derartige Propellergondelantriebe werden auch als POD-Antriebe bezeichnet. Propellergondelantriebe finden vorzugsweise im Schiffsbau Verwendung, wobei bei Propellergondelantrieben Antriebselemente nicht im Schiffsrumpf, sondern außerhalb des Schiffsrumpfs in einer an demselben befestigten Gondel, untergebracht sind. Außer im Schiffsbau finden Propellergondelantriebe auch bei anderen Wasserfahrzeugen Verwendung, wie zum Beispiel bei Booten, Torpedos, Drohnen oder Bohrinseln.

Aus der DE 10 2008 037 677 A1 ist es bereits grundsätzlich bekannt, eine in einer Gondel positionierte Antriebswelle des Propellergondelantriebs über als Axialgleitlager ausgebildete Axiallager und über als Radialgleitlager ausgebildete Radiallager zu lagern. Derartige Gleitlager verfügen gegenüber Wälzlagern über eine Vielzahl von Vorteilen, so zum Beispiel über eine längere Lebensdauer, eine geringe Anfälligkeit gegenüber Schwingungen, bessere Dämpfungseigenschaften sowie eine einfachere und kostengünstigere Ersatzteilbeschaffung und Lagerhaltung.

Aus der DE 9408824 U1 und der US 3 606 505 A sind Ausgestaltungen von Gleitlager für Anwendungen bei Propellergondelantrieben gezeigt.

Obwohl Propellergondelantriebe mit als Gleitlagern ausgebildeten Radiallagern bereits grundsätzlich bekannt sind, besteht Bedarf daran, derartige Propellergondelantriebe weiter zu verbessern.

Hiervon ausgehend liegt der vorliegenden Erfindung die Aufgabe zugrunde, einen neuartigen Propellergondelantrieb zu schaffen.

Diese Aufgabe wird nach einem ersten Aspekt der Erfindung durch einen Propellergondelantrieb nach Anspruch 1 gelöst. Hiernach weist die jeweilige Radialgleitlagereinrichtung mehrere Umfangssegmente auf, die einzeln und individuell austauschbar sind. Hiermit ist eine einfachere Wartung der Radialgleitlager eines Propellergondelantriebs möglich. Insbesondere können die Radialgleitlager, nämlich Umfangssegmente derselben, einzeln und individuell ausgetauscht werden, und zwar ohne dass ein den Propellergondelantrieb nutzendes Wasserfahrzeug in ein Dock verbracht werden muss.

Erfindungsgemäß ist jedes Umfangssegment der jeweiligen Radialgleitlagereinrichtung in axialer und radialer Richtung einzeln und individuell austauschbar, wobei hierzu die Umfangssegmente der jeweiligen Radialgleitlagereinrichtung in einer dieselben radial außen umgebenden Tragstruktur aufgenommen sind, und wobei an mindestens einer Umfangsposition der Tragstruktur eine verschließbare Entnahmeöffnung ausgebildet ist, über die in geöffnetem Zustand derselben Umfangssegmente der jeweiligen Radialgleitlagereinrichtung in radialer Richtung von der Tragstruktur einzeln und individuell demontierbar sind. Diese Ausgestaltung ist konstruktiv einfach.

Nach einer ersten vorteilhaften Weiterbildung des ersten Aspekts der Erfindung ist an mindestens einem axialen Ende der Tragstruktur ein Ring mit derselben lösbar verbunden, so dass nach zumindest teilweise Demontage des Rings zumindest eines der Umfangssegmente der jeweiligen Radialgleitlagereinrichtung in axialer Richtung von der Tragstruktur einzeln und individuell demontierbar ist. Auch diese Ausgestaltung ist konstruktiv einfach.

Diese Aufgabe wird nach einem zweiten Aspekt der Erfindung durch einen Propellergondelantrieb nach Anspruch 4 gelöst. Hiernach weist die jeweilige Radialgleitlagereinrichtung mehrere Umfangssegmente auf, die im Betrieb einzeln und individuell selbststätig relativ zur Antriebswelle ausrichtbar sind. Hiermit können Radialgleitlager optimal Wellenverkantungen und Wellenschiefstellungen, die sich im Betrieb ausbilden können, ausgleichen.

Der erste Aspekt kann allein oder bevorzugt in Kombination mit dem zweiten Aspekt genutzt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine schematisierte Darstellung eines Propellergondelantriebs;
- Fig. 2:: eine perspektivische Darstellung eines ersten Radiallagers für einen Propellergondelantrieb;
- Fig. 3:: eine perspektivische Darstellung eines zweiten Radiallagers für einen Propellergondelantrieb;
- Fig. 4:: eine perspektivische Darstellung eines Radial-Axial-Lagers für Propellergondelantrieb;
- Fig. 5:: eine perspektivische Darstellung eines dritten Radiallagers für einen erfindungsgemäßen Propellergondelantrieb in einem ersten Zustand desselben; und
- Fig. 6:: das Radiallager der Fig. 5 in einem zweiten Zustand.

Die Erfindung betrifft einen Propellergondelantrieb.

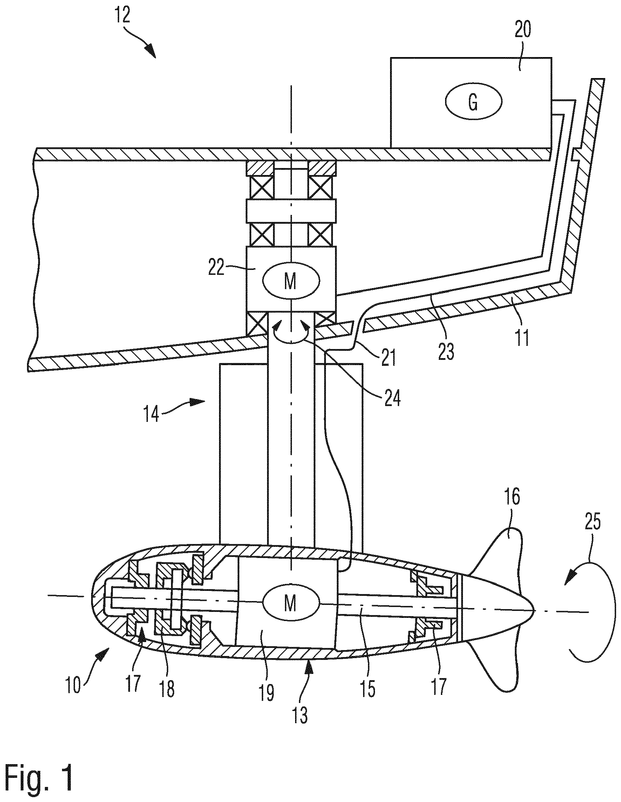

Fig. 1 zeigt einen grundsätzlichen, aus dem Stand der Technik bekannten Aufbau eines Propellergondelantriebs 10, der einem Rumpf 11 eines Wasserfahrzeugs 12 zugeordnet ist. So ist der Propellergondelantrieb 10 in einer Gondel 13 aufgenommen, die über eine Aufhängung 14 mit dem Rumpf 11 des Wasserfahrzeugs 12 verbunden ist.

Der Propellergondelantrieb 10 verfügt über eine Welle 15 um Antreiben eines Propellers 16, wobei die Welle 15 über Radialgleitlager 17 und Axialgleitlager 18 in der Gondel 13 des Propellergondelantriebs 10 gelagert ist.

Im gezeigten Ausführungsbeispiel erfolgt der Antrieb der Welle 15 des Propellergondelantriebs 10 über einen Antriebsmotor 19, bei welchem es sich im gezeigten Ausführungsbeispiel um einen Elektromotor handelt, der ausgehend von einem Generator 20 über eine elektrische Leitung 21 mit elektrischer Energie versorgt werden kann. Ferner zeigt Fig. 1 einen ebenfalls als Elektromotor ausgebildeten Antrieb 22, der ebenfalls über eine elektrische Leitung 23 mit dem Generator 20 verbunden ist, wobei über den Antrieb 22 die Gondel 13 und damit der Propellergondelantrieb 10 um eine vertikal verlaufende Achse im Sinne des Doppelpfeils 24 verschwenkt werden kann. Der Antriebsmotor 19 treibt die Antriebswelle 15 des Pendelgondelantriebs 13 und damit den Propeller 16 um eine sich im Wesentlichen in horizontaler Richtung erstreckende Achse im Sinne des Pfeils 25 an.

Die oder jede Radiallagereinrichtung 17 des erfindungsgemäßen Pendelgondelantriebs ist als Radialgleitlagereinrichtung ausgebildet.

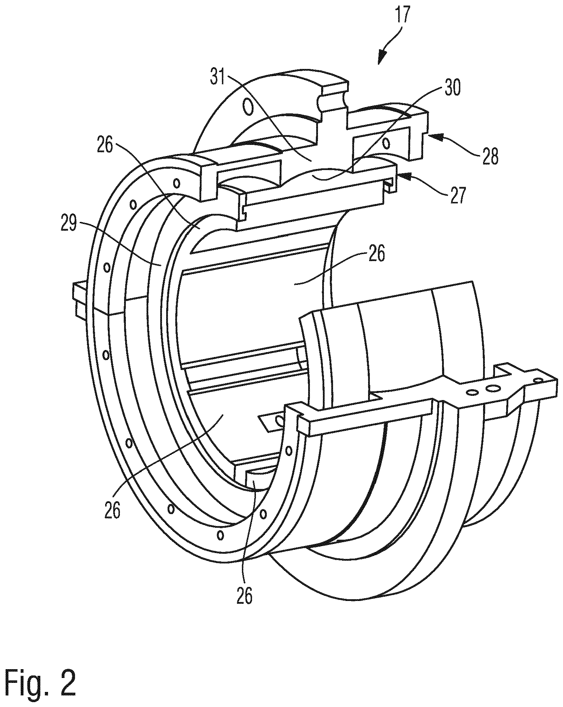

Fig. 2 zeigt ein Detail einer Radialgleitlagereinrichtung 17, wobei die Radialgleitlagereinrichtung 17 mehrere Umfangssegmente 26 aufweist.

Die Umfangssegmente 26 sind radial außen von einer die Umfangssegmente 26 umgebenden Tragstruktur 27 aufgenommen, wobei die Tragstruktur 27 ihrerseits radial außen von einem Lagerring 28 umgeben ist.

Hier sind die Umfangssegmente 26 der jeweiligen Radialgleitlagereinrichtung 27 einzeln und individuell austauschbar.

Im Ausführungsbeispiel der Fig. 2 sind die Umfangssegmente 26 der Radialgleitlagereinrichtung 17 in axialer Richtung einzeln und individuell austauschbar.

So kann Fig. 2 entnommen werden, dass die Umfangssegmente 26 im Sinne einer Nut-Feder-Verbindung in der die Umfangssegmente 26 radial außen umgebenden Tragstruktur 27 aufgenommen sind, wobei an einem Ende der Tragstruktur 27 mit derselben ein Ring 29 lösbar verbunden ist, der vorzugsweise in Umfangsrichtung segmentiert ist.

Nach zumindest teilweiser Demontage des Rings 29, nämlich nach Demontage mindestens eines Umfangssegments des Rings 29, kann ein jedes der Umfangssegmente 26 der Radialgleitlagereinrichtung 17 individuell und einzeln in axialer Richtung von der Tragstruktur 27 demontiert werden, nämlich dasjenige Umfangssegment 26 der Radialgleitlagereinrichtung 17, welches im Bereich des demontierten Umfangssegments des Rings 29 positioniert ist.

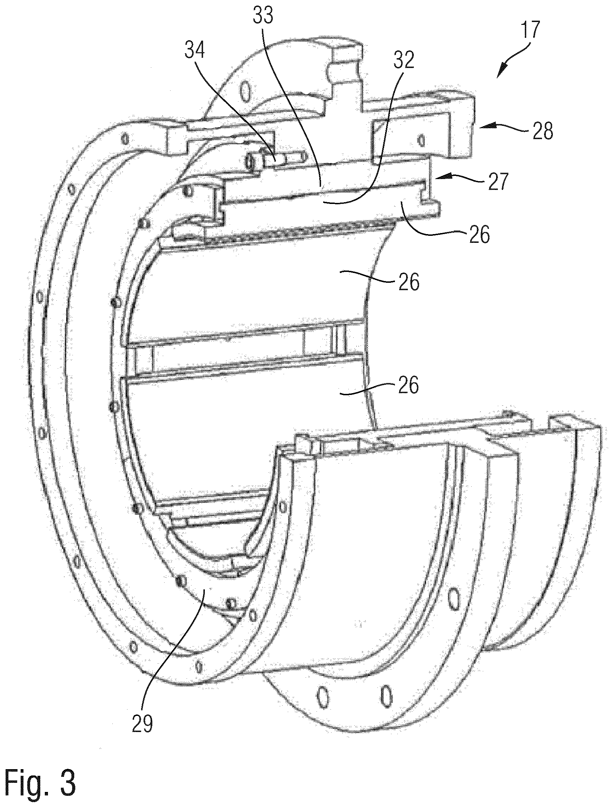

Auch das Ausführungsbeispiel der Fig. 3 macht von dieser einzelnen und individuellen Austauschbarkeit der Umfangssegmente 26 der Radialgleitlagereinrichtung 17 in axialer Richtung Gebrauch, weshalb zur Vermeidung unnötiger Wiederholungen für das Ausführungsbeispiel der Fig. 3 gleiche Bezugsziffern verwendet werden wie für das Ausführungsbeispiel der Fig. 2.

Beim Ausführungsbeispiel der Fig. 2 weist die Tragstruktur 27 einen radial äußeren Abschnitt 30 mit einer kugeligen bzw. balligen Konturierung auf, der mit einem korrespondierend konturierten Abschnitt 31 des Lagerrings 28 derart zusammenwirkt, dass alle Umfangssegmente 26 der Radialgleitlagereinrichtung 17 gemeinsam relativ zur zu lagernden Antriebswelle 15 ausrichtbar sind, um zum Beispiel Wellenverkantungen und Wellenschiefstellungen über die Radiallagereinrichtung 17 auszugleichen bzw. die Radiallagereinrichtung 17 an derartige Wellenverkantungen bzw. Wellenschiefstellungen selbsttätig anzupassen.

Wie im Ausführungsbeispiel der Fig. 3 gezeigt, ist es auch möglich, dass jedes Umfangssegment 26 der Radiallagereinrichtung 17 im Betrieb einzeln und individuell selbsttätig relativ zur zu lagernden Antriebswelle 15 ausrichtbar ist.

Dazu weist im Ausführungsbeispiel der Fig. 3 jedes Umfangssegment 26 radial außen einen ballig oder kugelig konturierten Abschnitt 32 auf, der mit einem korrespondierend konturierten Abschnitt 33 der Tragstruktur 27 zusammenwirkt.

Die Tragstruktur 27 ist dabei über Schraubverbindungen 34 fest mit dem Lagerring 28 verbunden.

Bedingt dadurch, dass jedes Umfangssegment 26 der Radiallagereinrichtung 17 individuell und einzeln relativ zur Antriebswelle ausrichtbar ist, kann die Radiallagereinrichtung 17 Wellenschiefstellungen und Wellenverkantungen noch besser ausgleichen, als diese im Ausführungsbeispiel der Fig. 2 bei einer gemeinsamen Verlagerung aller Umfangssegmente 26 relativ zur Antriebswelle 15 möglich ist.

Die Ausrichtung der Umfangssegmente relativ zur Antriebswelle kann über Federelemente oder über hydraulische Beaufschlagung unterstützt werden.

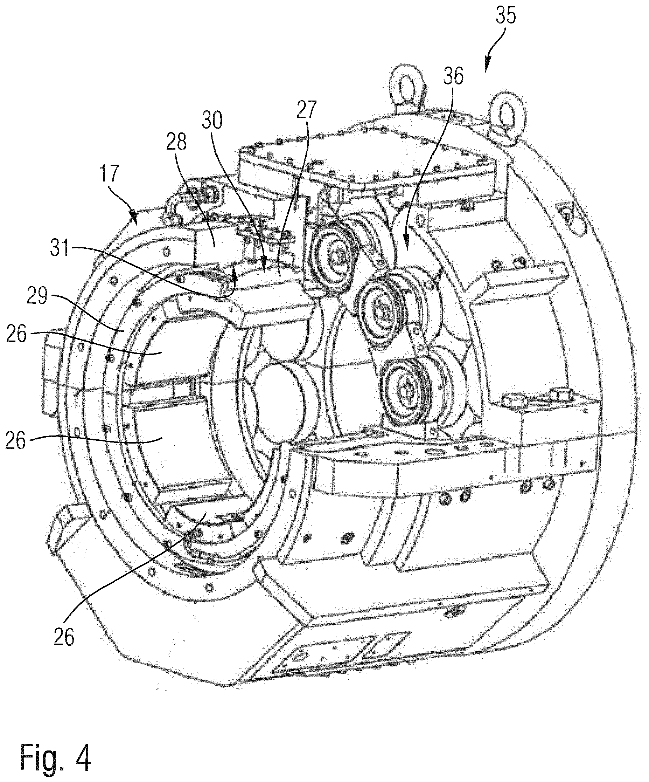

Fig. 4 zeigt eine kombinierte Radial-Axial-Lagereinrichtung 35, welche die Radiallagereinrichtung 17 der Fig. 2 mit einer Axiallagereinrichtung 36 kombiniert. Der Aufbau einer Axiallagereinrichtung 36 ist bereits aus der DE 10 2008 037 677 A1 bekannt, auf deren Offenbarungsgehalt hier durch Verweis vollumfänglich Bezug genommen wird.

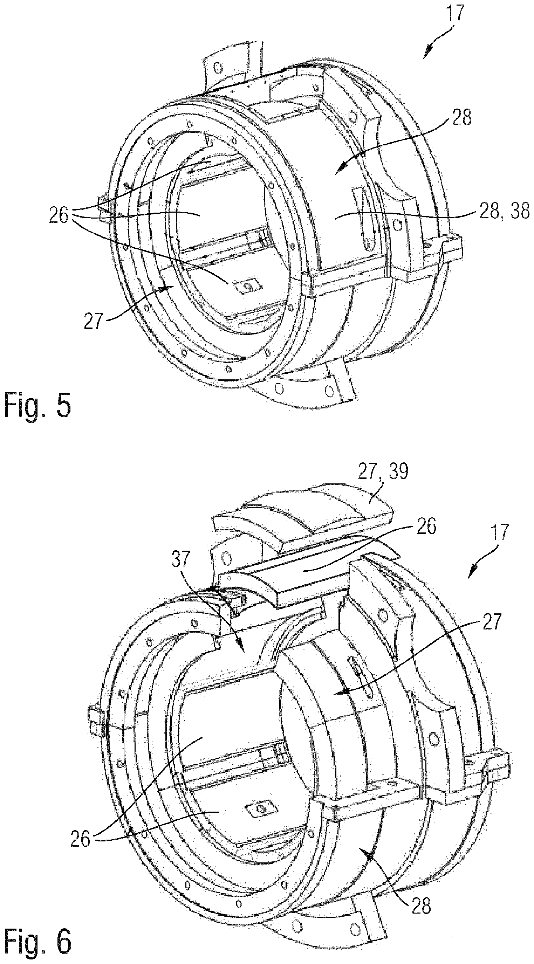

Im Unterschied zu den in Fig. 2 bis 4 gezeigten Ausführungsbeispielen ist es nach dem erfindungsgemäßen Ausführungsbeispiel der Fig. 5 und 6 auch möglich, dass nach dem ersten Aspekt der hier vorliegenden Erfindung die Umfangssegmente 26 der jeweiligen Radialgleitlagereinrichtung 17 in radialer Richtung einzeln und individuell austauschbar sind. Die Umfangssegmente 26 der jeweiligen Radialgleitlagereinrichtung 17 sind gemäß Fig. 5 und 6 wiederum in einer dieselben radial außen umgebenden Tragstruktur 27 aufgenommen, wobei an mindestens einer Umfangsposition der Tragstruktur 27 eine verschließbare Entnahmeöffnung 37 ausgebildet ist, über die Umfangssegmente 26 der jeweiligen Radialgleitlagereinrichtung 17 in radialer Richtung von der Tragstruktur 27 einzeln und individuell demontierbar sind.

Sowohl die Tragstruktur 27 als auch der die Tragstruktur 27 radial außen umgebende Lagerring 28 verfügen dabei über ein Umfangssegment 38 bzw. 39, die nach Entfernung bzw. Demontage die Entnahmeöffnung 37 öffnen bzw. freigeben und die nach Montage die Entnahmeöffnung 37 verschließen. Jedes der Umfangssegmente 26 der Radialgleitlagereinrichtung 17 kann bei geöffneter Entnahmeöffnung 37 individuell und einzeln in radialer Richtung von der Tragstruktur 27 demontiert werden, nämlich dasjenige Umfangssegment 26 der Radialgleitlagereinrichtung 17, welches im Bereich der geöffneten Entnahmeöffnung 37 positioniert ist.

Auch beim Ausführungsbeispiel der Fig. 5 und 6 kann in Kombination der zweite Aspekt der hier vorliegenden Erfindung genutzt werden.

Die hier vorliegende Erfindung schlägt demnach einen Propellergondelantrieb mit verbesserten Radialgleitlagern vor, die auch in kombinierten Radial-Axial-Gleitlagern zum Einsatz kommen können.

Umfangssegmente der Radialgleitlagereinrichtungen sind einzeln und individuell austauschbar und/oder einzeln und individuell selbsttätig im Betrieb zur zu lagernden Antriebswelle ausrichtbar.

Vorzugsweise sind die Werkstoffe der Radialgleitlagereinrichtung so gewählt, dass eine elektrisch isolierte Ausführung derselben vorliegt.

Eine hydraulische Schmierung der Radialgleitlagereinrichtungen erfolgt über ein internes Schmiersystem des Propellergondelantriebs. Falls nötig, können auch separate Pumpen genutzt werden, um die Schmierung der Radialgleitlagereinrichtungen zu unterstützen.

Hydrodynamisch ungünstige Betriebszustände können durch eine hydrostatische Hochdruckschmierung der Radialgleitlager kompensiert werden. Hierzu können eine oder mehrere Umfangssegmente der Radialgleitlager mit entsprechenden Hydrostatiktaschen oder Hydrostatiknuten aufweisen.

### Bezugszeichenliste

- 10: Propellergondelantrieb
- 11: Rumpf
- 12: Wasserfahrzeug
- 13: Gondel
- 14: Aufhängung
- 15: Antriebswelle
- 16: Propellers
- 17: Radiallagereinrichtung
- 18: Axiallagereinrichtung
- 19: Motor
- 20: Generator
- 21: elektrische Leitung
- 22: Motor
- 23: elektrische Leitung
- 24: Pfeil
- 25: Pfeil
- 26: Umfangssegmente
- 27: Tragstruktur
- 28: Lagerring
- 29: Ring
- 30: Abschnitt
- 31: Abschnitt
- 32: Abschnitt
- 33: Abschnitt
- 34: Befestigungsschraube
- 35: Radial-Axial-Lagereinrichtung
- 36: Axiallagereinrichtung
- 37: Entnahmeöffnung
- 38: Umfangssegment
- 39: Umfangssegment

## Patentansprüche

1. Propellergondelantrieb (10), mit einer Antriebswelle (15) zum Antreiben eines Propellers (16), mit mindestens einer Axiallagereinrichtung (18) und mindestens einer Radiallagereinrichtung (17) zur Lagerung der Antriebswelle (15) und zur Aufnahme von radialen Kräften und axialen Kräften der Antriebswelle (15), wobei zumindest die oder jede Radiallagereinrichtung (17) als Gleitlagereinrichtung ausgebildet ist, wobei die jeweilige Radialgleitlagereinrichtung (17) mehrere Umfangssegmente (26) aufweist, die in axialer und radialer Richtung einzeln und individuell austauschbar sind, wobei die Umfangssegmente (26) in einer dieselben radial außen umgebenden Tragstruktur (27) aufgenommen sind und die Tragstruktur (27) von einem Lagerring (28) außen umgeben ist, wobei an mindestens einer Umfangsposition der Tragstruktur (27) eine verschließbare Entnahmeöffnung (37) ausgebildet ist und sowohl die Tragstruktur (27) als auch der Lagerring (28) über ein Umfangssegment (38, 39) verfügen, welche nach Entfernung bzw. Demontage die Entnahmeöffnung (37) öffnen, wodurch jedes der Umfangssegmente (26) der Radialgleitlagereinrichtung (17) bei geöffneter Entnahmeöffnung (37) individuell und einzeln in radialer Richtung von der Tragstruktur (27) durch Entnahme durch die Entnahmeöffnung (37) demontiert werden kann.

2. Propellergondelantrieb nach Anspruch 1, wobei an mindestens einem axialen Ende der Tragstruktur (27) ein Ring (29) mit derselben lösbar verbunden ist, so dass nach zumindest teilweise Demontage des Rings (29) zumindest eines der Umfangssegmente (26) der jeweiligen Radialgleitlagereinrichtung (17) in axialer Richtung von der Tragstruktur (27) einzeln und individuell demontierbar ist.

3. Propellergondelantrieb nach Anspruch 2, wobei der Ring (29) in Umfangsrichtung segmentiert ist.

4. Propellergondelantrieb (10) nach einem der Ansprüche 1 bis 3, wobei die jeweilige Radialgleitlagereinrichtung (17) mehrere Umfangssegmente (26) aufweist, die im Betrieb einzeln und individuell selbststätig relativ zur Antriebswelle (15) ausrichtbar sind, um Wellenschiefstellungen und Wellenverkantungen auszugleichen.

5. Propellergondelantrieb nach Anspruch 4, wobei die Umfangssegmente (26) der jeweiligen Radialgleitlagereinrichtung (27) in einer dieselben radial außen umgebenden Tragstruktur (27) aufgenommen sind, wobei jedes Umfangssegment (26) radial außen einen ballig oder kugelig konturierten Abschnitt (32) aufweist, über welches jedes Umfangssegmente (26) im Betrieb einzeln und individuell selbststätig relativ zur Antriebswelle (15) ausrichtbar ist.

## Claims

1. A propeller gondola drive (10), having a driveshaft (15) for driving a propeller (16), having at least one axial bearing device (18) and at least one radial bearing device (17) for mounting the driveshaft (15) and for absorbing radial forces and axial forces of the driveshaft (15), wherein at least the or each radial bearing device (17) is formed as sliding bearing device, wherein the respective radial sliding bearing device (17) comprises multiple circumferential segments (26), which are individually interchangeable in the axial and radial direction, wherein the circumferential segments (26) are received in a support structure (27) surrounding the same radially outside and the support structure (27) is surrounded by a bearing ring (28) on the outside, wherein in at least one circumferential position of the support structure (27) a closable removal opening (37) is formed and both the support structure (27) and also the bearing ring (28) comprise a circumferential segment (38, 39) which (37), following removal or disassembly, open the removal opening as a result of which each of the circumferential segments (26) of the radial sliding bearing device (17) with opened removal opening (37) can be individually disassembled in the radial direction from the support structure (27) by removal through the removal opening (37).

2. The propeller gondola drive according to Claim 1, wherein on at least one axial end of the support structure (27) a ring (29) is detachably connected to the same, so that following the at least partial disassembly of the ring (29) at least one of the circumferential segments (26) of the respective radial sliding bearing device (17) can be individually disassembled from the support structure (27) in the axial direction.

3. The propeller gondola drive according to Claim 2, wherein the ring (29) is segmented in the circumferential direction.

4. The propeller gondola drive (10) according to any one of the Claims 1 to 3, wherein the respective radial sliding bearing device (17) comprises multiple circumferential segments (26) which, during the operation, can be individually aligned automatically relative to the driveshaft (15) in order to offset shaft inclined positions and shaft tilts.

5. The propeller gondola drive according to Claim 4, wherein the circumferential segments (26) of the respective radial bearing sliding device (27) are received in a support structure (27) surrounding the same radially outside, wherein each circumferential segment (26) radially on the outside comprises a crowned or spherically contoured portion (32), via which each circumferential segment (26) during the operation can be individually aligned automatically relative to the driveshaft (15).

## Revendications

1. Entraînement de propulseur omnidirectionnel (10), comportant un arbre d'entraînement (15) pour entraîner un propulseur (16), comportant au moins un dispositif de palier axial (18) et au moins un dispositif de palier radial (17) pour le positionnement de l'arbre d'entraînement (15) et pour absorber les forces radiales et les forces axiales de l'arbre d'entraînement (15), dans lequel au moins le ou chaque dispositif de palier radial (17) est configuré comme un dispositif de palier radial lisse, dans lequel le dispositif de palier radiale lisse respectif (17) présente plusieurs segments circonférentiels (26), qui peuvent être remplacés isolément et individuellement dans la direction axiale radiale, dans lequel les segments circonférentiels (26) sont renfermés dans une structure porteuse (27) entourant à l'extérieur radialement ces derniers et la structure porteuse (27) est entourée à l'extérieur par une bague de palier (28), dans lequel à au moins une position circonférentielle de la structure porteuse (27) une ouverture de retrait obturable (37) est réalisée et tant la structure porteuse (27) que la bague de palier (28) disposent d'un segment circonférentiel (38,39), qui après le retrait respectivement le démontage ouvrent l'ouverture de retrait (37), moyennant quoi chacun des segments circonférentiels (26) du dispositif de palier radial lisse (17) lorsque l'ouverture de retrait est ouverte (37) peut être démonté individuellement et isolément dans la direction radiale à partir de la structure porteuse (27) par retrait à travers l'ouverture de retrait (37).

2. Entraînement de propulseur omnidirectionnel selon la revendication 1, dans lequel à au moins une extrémité axiale de la structure porteuse (27) un anneau (29) est relié de manière amovible à celle-ci, de sorte que après un démontage au moins partiel de l'anneau (29) au moins un des segments circonférentiels (26) du dispositif de palier lisse radial respectif (17) peut être démonté dans la direction axiale à partir de la structure porteuse (27) isolément et individuellement.

3. Entraînement de propulseur omnidirectionnel selon la revendication 2, dans lequel l'anneau (29) est segmenté dans la direction circonférentielle.

4. Entraînement de propulseur omnidirectionnel (10) selon une des revendications 1 à 3, dans lequel le dispositif de palier radial lisse respectif (17) présentes plusieurs segments circonférentiels (26), qui peuvent être alignés en fonctionnement individuellement et isolément de manière automatique par rapport à l'arbre d'entraînement (15), afin d'équilibrer les positions d'inclinaison et les croisements d'arbres.

5. Entraînement de propulseur omnidirectionnel selon la revendication 4, dans lequel les segments circonférentiels (26) du dispositif de palier lisse radial respectif (27) sont renfermés dans une structure porteuse (27) entourant ce dernier radialement à l'extérieur, dans lequel chaque segment circonférentiel (26) présente une portion à contours sphériques ou bombés (32), par l'intermédiaire de laquelle chaque segment circonférentiel (26) en fonctionnement peut être aligné isolément et individuellement de manière automatique par rapport à l'arbre d'entraînement (15).
